# EUROPÄISCHE PATENTSCHRIFT

(11) **EP 1 703 160 B1**
(45) Veröffentlichungstag und Bekanntmachung des Hinweises auf die Patenterteilung: **25.02.2009**
(21) Anmeldenummer: 05005799.1
(22) Anmeldetag: 17.03.2005
(51) Int. Cl.: F16D 13/75

(54) **Ausrückeinrichtung für eine Reibungskupplung eines Kraftfahrzeuges**
Release mechanism for a friction clutch of a motor vehicle
Dispositif de debrayage pour un embrayage à friction d'une automobile

(43) Veröffentlichungstag der Anmeldung: 20.09.2006
(73) Patentinhaber: ZF Friedrichshafen AG, 88046 Friedrichshafen (DE)
(72) Erfinder: Reuter, Klaus, 97723 Oberthulba (DE); Müller, Karl, 97490 Kronungen (DE); Obergfell, Ralf, 97497 Dingolshausen (DE)

(56) Entgegenhaltungen:
- EP-A- 0 699 844
- DE-A1- 19 700 930
- US-A- 4 763 766

## Beschreibung

Die Erfindung betrifft eine Ausrückeinrichtung für eine Reibungskupplung eines Kraftfahrzeuges gemäß dem Oberbegriff des Patentanspruchs 1.

Ausrückeinrichtungen mit einem Kupplungshebel zur Übertragung einer Betätigungskraft auf einen axial verschiebbaren Ausrücker sind allgemein bekannt. Eine derartige Anordnung geht beispielsweise aus der DE 197 00 930 A1 hervor, bei der ein als Schwinge ausgebildeter Kupplungshebel mittels eines Kugelgelenks schwenkbar an einer Getriebewandung gelagert ist und auf welchen über das andere Ende mittels eines Stößels eines Hydraulikzylinders eine Betätigungskraft zum Betätigen einer Reibungskupplung eingeleitet werden kann. Der dort dargestellte Kupplungshebel besitzt in dessen Längsmitte eine Ausnehmung, welche einen auf einem Führungsrohr axial verschiebbar angeordneten Ausrücker umschließt und wobei eine Anlagefläche der Schwinge an einer an dem Ausrücker ausgebildeten und zur Getriebeseite konvex vorstehend gewölbten Fläche zur Kraftübertragung anliegt.

Bei der Betätigung der Reibungskupplung wird der Kupplungshebel um das Kugelgelenk verschwenkt, wozu insbesondere im Bereich zwischen dem Ausrücker und dem Angriffsbereich des Stößels ein Verschwenkraum vorgehalten werden muss. Bei einem Verschleiß der dort dargestellten "gedrückten" Reibungskupplung verlagert sich der Ausrücker im unbetätigten Zustand allmählich axial in Richtung des Getriebes. Diese Axialverschiebung hat eine in der Regel noch größere, entsprechend der am Ausrückhebel wirkenden Übersetzung, axiale Verlagerung des Angriffsbereiches des Stößels in Richtung des Getriebes zur Folge. Das heißt, dass zur Sicherung der Funktionsfähigkeit der Reibungskupplung ein noch größerer Freiraum als Verschwenkbereich vorgehalten werden muss. Daraus ergibt sich weiterhin, dass der Druckraum des Hydraulikzylinders zusätzlich zu dessen Arbeitsbereich um ein entsprechendes Ausgleichsvolumen vergrößert ausgeführt werden muss. Wenn bspw. an einem Fahrzeug das Verhältnis der wirkende Hebellängen am Ausrücker und am Angriffsbereich des Stößels, d.h. das Hebelverhältnis, 1:2 beträgt und der Ausrücker bei einem Kupplungsverschleiß über dessen Lebensdauer 10mm in Richtung Getriebe verschoben wird, so führt das am Kolben eines hydraulischen Nehmerzylinders bereits zu einer Verschiebung von 20mm, wobei jedoch in der Praxis aus Sicherheitsgründen ca. 25mm Hublänge am Nehmerzylinder vorzuhalten sind. Demgegenüber beträgt ein Arbeitshub zum Betätigen der Kupplung lediglich etwa 17mm.

Der von dem Kupplungshebel infolge eines Kupplungsverschleißes beanspruchte Freiraum steht der gegenwärtigen fortschreitenden Integration und der somit der Darstellung eines kompakten Kraftfahrzeugantriebsstranges erheblich entgegen.

Aus der Druckschrift EP 0 699 844 A1 ist bereits eine gattungsgemäße Ausrückeinrichtung bekannt, bei der die Lagerstelle des Kupplungshebels bei einem Verschleiß der Reibungskupplung selbsttätig über eine Nachstelleinrichtung axial nachgestellt wird.

Zur Ausbildung der Nachstelleinrichtung umfasst der in den Figuren der EP 0 699 844 A1 dargestellte Gelenkkopf eine Achse, die mit einem Ende an einem Gehäuseteil einer Reibungskupplung festgelegt ist und auf deren anderen Ende eine zylindrische Hülse aufgeschoben ist, an der sich der Kupplungshebel schwenkbeweglich abstützen kann. Die Achse ist über einen Teil deren Länge mit einer Verzahnung ausgebildet, die mit einem in der Hülse lösbar angeordneten Zahnelement zusammenwirkt. Dieses Zahnelement wird bei einer durch den Kupplungsverschleiß bestimmten Stellung des Kupplungshebels mittels eines Stiftes von der Achse abgehoben, so dass sich die, die Lagerstelle des Kupplungshebels darstellende Hülse axial auf der Achse verlagern und in der nächstfolgenden Zahnlücke einrasten kann.

An der beschriebenen Ausrückeinrichtung ist es nachteilig, dass bei einem allmählichen, d.h. kontinuierlich voranschreitenden Kupplungsverschleiß, die Nachstelleinrichtung nicht ebenso kontinuierlich, sondern stattdessen stufenweise nachgestellt wird. Die Nachstellstufen bzw. das Nachstellinkrement ist dabei durch die Ausgestaltung einer Formschlussverbindung, insbesondere durch den Zahnabstand festgelegt.

Die Erfindung stellt sich die Aufgabe, eine gattungsgemäße Ausrückeinrichtung mit einer Nachstelleinrichtung für die Lagerstelle des Kupplungshebels so zu verbessern, dass diese eine noch besser an einen jeweiligen Verschleißzustand der Reibungskupplung angepasste Nachstellung der Lagerstelle ermöglicht.

Die Aufgabe wird gelöst mit einer gattungsgemäßen Ausrückeinrichtung, welche zusätzlich das im Kennzeichen des Anspruchs 1 aufgeführte Merkmal aufweist.

Gemäß der Erfindung ist vorgesehen, dass zur gegenseitigen Lagefestlegung von Sockelelement und Kopfelement zwischen einem konischen oder keilförmigen Abschnitt am Kopfelement einerseits und andererseits dem Sockelelement Klemmkörper eingeklemmt angeordnet sind, welche durch die Wirkung von am Kupplungshebel und am ersten Lagerelement ausgebildeten Sensormitteln in axialer Richtung verlagerbar sind und dabei die Arretierung des Kopfelementes kurzzeitig aufheben können. Durch diese Ausgestaltung wird eine stufenlose, d.h. eine kontinuierliche Nachstellung des Kopfelementes der Kupplungshebel-Lagerstelle ermöglicht. Eine solche stufenlose Nachstellung entspricht damit in bester Weise dem ebenso stufenlos voranschreitenden Kupplungsverschleiß, d.h. dem Abrieb der Kupplungsbeläge einer Reibungskupplung, welche eine axiale Nachstellung der Lagerstelle des Kupplungshebels erforderlich macht.

Durch das Vorsehen einer automatischen Nachstelleinrichtung an der Lagerstelle des Kupplungshebels, welche diese bei einem Verschleiß der Reibungskupplung selbsttätig in axialer Richtung nachstellt, wird bei Verschleiß eine Parallelverschiebung des Kupplungshebels bezüglich dessen Lage im Neuzustand erreicht. Dadurch wird die Vergrößerung des Vorhaltebereiches durch das am Kupplungshebel wirkende Hebelverhältnis eliminiert. Der axiale Vorhaltebereich ist damit über die gesamte Länge des Kupplungshebels konstant und zu dem an einem Nehmerzylinder vorzuhaltenden Hubbereich identisch, sodass letzterer wesentlich kompakter gestaltet werden kann. Der im Bereich des Hebels eingesparte Freiraum kann für zusätzliche Komponenten im Antriebsstrang oder zu dessen kompakterer Ausbildung genutzt werden.

Vorteilhafte Weiterbildungen und Ausgestaltungen der Erfindung sind in den Unteransprüchen angegeben.

Die Erfindung wird im Folgenden anhand der beigefügten Figuren beispielhaft erläutert.

Es zeigen:
- Fig. 1: eine schematische Darstellung einer Ausrückeinrichtung mit einer Nachstelleinrichtung,
- Fig. 2a-c: ein Kugelgelenk zur Lagerung eines Kupplungshebels mit einer Nachstelleinrichtung in verschiedenen Positionen.

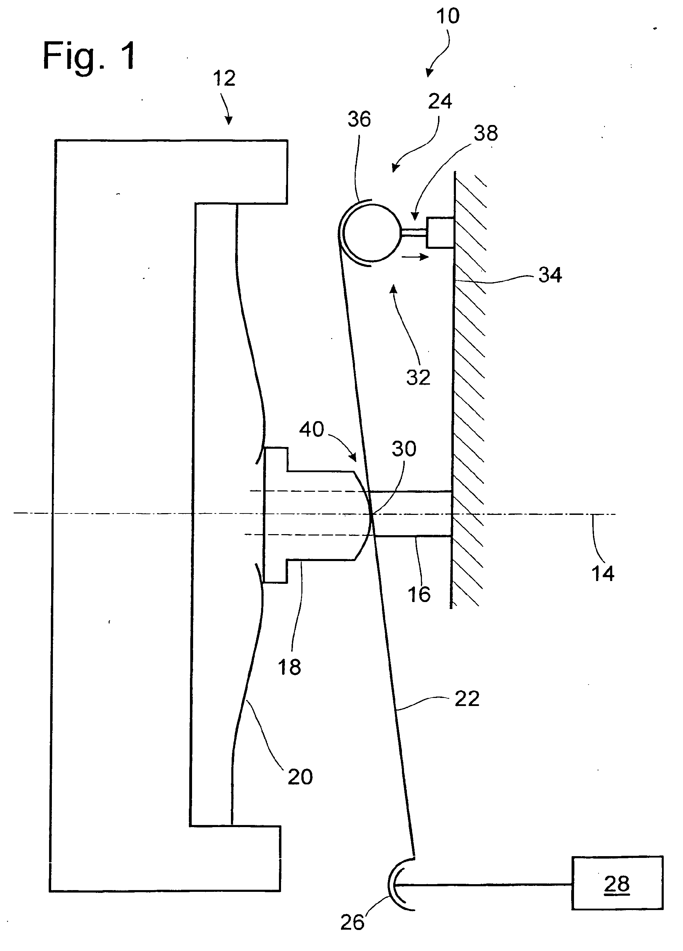

Fig. 1 stellt schematisch ein Ausrückeinrichtung 10 für eine Kraftfahrzeugreibungskupplung 12 dar und umfasst zunächst einen axial, entlang einer Ausrückachse 14 auf einem Führungsrohr 16 verschiebbaren Ausrücker 18, der zur Übertragung einer Kupplungsbetätigungskraft mit einem als Membranfeder ausgebildeten Ausrückorgan 20 der Kupplung 12 in Wirkverbindung steht. Bezugsziffer 22 bezeichnet einen um ein Kugelgelenk 24 schwenkbar gelagerten Kupplungshebel, welcher einen Kraftaufnahmebereich 26 zur Aufnahme der Kupplungsbetätigungskraft von einem Stößel eines Hydraulikzylinders 28 und einen Kraftübertragungsbereich 30 aufweist, der sich zur Übertragung der Kupplungsbetätigungskraft mit dem Ausrücker 18 in Wirkverbindung befindet. Das Kugelgelenk 24 umfasst einen Gelenkkopf 32 als ein erstes Lagerelement, welcher an einem Getriebegehäuse 34 des Fahrzeuges festgelegt ist und ein als Gelenkpfanne 36 ausgebildetes zweites Lagerelement, welches am Kupplungshebel 22 angeordnet ist.

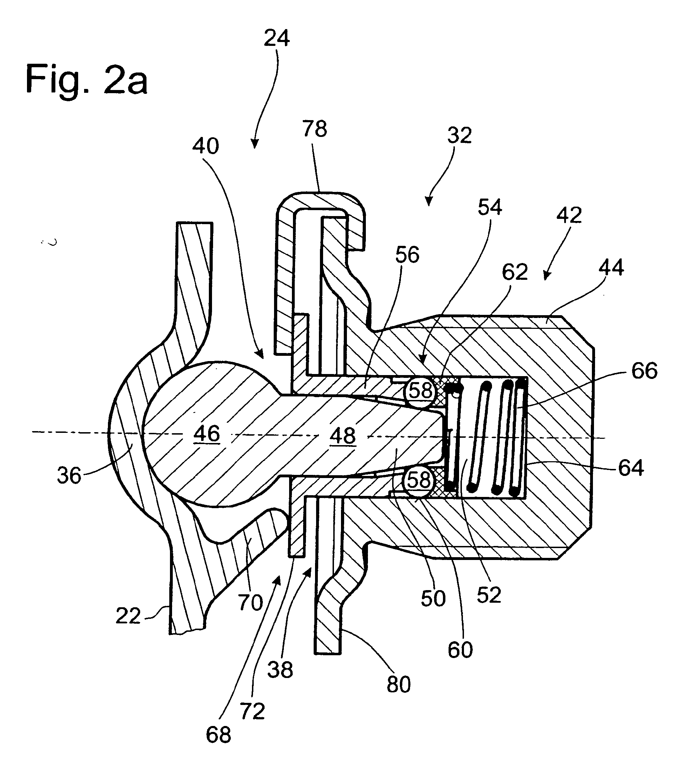

Das Kugelgelenk 24 weist eine, in den Fig. 2a-c im Detail dargestellte, automatische Nachstelleinrichtung 38 auf, womit die Lagerstelle 24 bei einem Verschleiß der Reibungskupplung 12 selbsttätig in axialer Richtung, d.h. in Richtung der Ausrückachse nachgestellt werden kann. Wie in Fig. 2a erkennbar, ist der Gelenkkopf 32 mehrteilig ausgeführt mit einem Kopfelement 40 und einem mit diesem verbundenen zylinderförmigen Sockelelement 42 auf, welches mit einem Gewinde 44 in einer Bohrung des Getriebegehäuses 34 eingeschraubt und dort bezüglich der Ausrückachse 14 radial festgelegt ist. Das Kopfelement 40 umfasst einen in der Gelenkpfanne 36 gelagerten Kugelkopf 46 und einen davon abstehenden zylindrischen Zapfen 48, dessen Endabschnitt 50 konisch oder keilförmig ausläuft und in eine zentrale Ausnehmung 52 des Sockelelements 42 eintaucht. Das Kopfelement 40 wird im am Fahrzeug montierten zustand vom Kupplungshebel 22 in Richtung des Sockelelementes 42 gedrückt, wodurch dieses gegen Herausfallen gesichert ist.

Die funktionale Verbindung zwischen dem Kopfelement 40 und dem Sockelelement 42 erfolgt in der in Fig. 2a dargestellten Lage mittels einer zwischen diesen angeordneten lösbaren Arretiereinrichtung 54, welche insbesondere den Axialabstand des Kopfelementes 40 zum dem Sockelelement 42 bestimmt. Dazu ist der Zapfen 48 in einer in der Ausnehmung 52 verschiebbar angeordneten Verstellhülse 56 eingeführt und kann sich dort über an diesem anliegende Klemmkörper 58, bspw. Klemmrollen oder -kugeln, nach radial außen an der Wandung 60 der Ausnehmung 52 abstützen. Die Klemmkörper 58 sind auf der der Verstellhülse 56 gegenüberliegenden Axialseite von einem Klemmkörperträger 62 axial gefangen, welcher seinerseits mittels einer zwischen diesem und dem Boden 64 der Ausnehmung 52 angeordnete Druckfeder 66 in Anlage gehalten wird. Mit dieser als Klemmeinrichtung ausgebildeten Arretiereinrichtung 54 ist in dem dargestellten geklemmten Zustand die axiale Lage des Kopfelementes 40 und somit der Lagerstelle 24 festgelegt.

Wie bereits in der Beschreibungseinleitung ausgeführt, verlagert sich der Ausrücker 18 bei einem Verschleiß der Reibungskupplung 12 in Richtung des Getriebegehäuses 34, wodurch der Kupplungshebel 22 mit dessen Endbereich 26 ebenfalls zunehmend in diese Richtung verschwenkt wird. Zur Vermeidung einer solchen verschleißbedingten Schwenklage des Kupplungshebels 22 kann deshalb bei einer vorgebbaren Stellung des Kupplungshebels 22 die axiale Arretierung zwischen dem Kopfelement 40 und dem Sockelelement 42 gelöst werden. Dazu sind an der Nachstelleinrichtung 38 Sensormittel 68 vorgesehen, welche einen Fortsatz 70 am Kupplungshebel 22 und einen Ringkragen 72 an der Verstellhülse 56 umfassen.

In dem in Fig. 2a gezeigten Neuzustand der Reibungskupplung 12 wird das Kopfelement 40 von der Gelenkpfanne 36 des Kupplungshebels 22 in Richtung des Getriebegehäuses 34 (Pfeilrichtung in Fig. 1) gedrückt, wobei das Kopfelement 40 im Sockelelement 42 festgeklemmt ist. Der Fortsatz 70 und der Ringkragen 72 sind dabei in einem kräftefreien Anlagekontakt und können sich gegenseitig nicht beeinflussen. Beim Betätigen der Reibungskupplung 12 erfolgt Verschwenkbewegung des Kupplungshebels in Richtung zur Kupplung 12, wobei der Fortsatz 72 von dem feststehenden Ringkragen 72 abhebt.

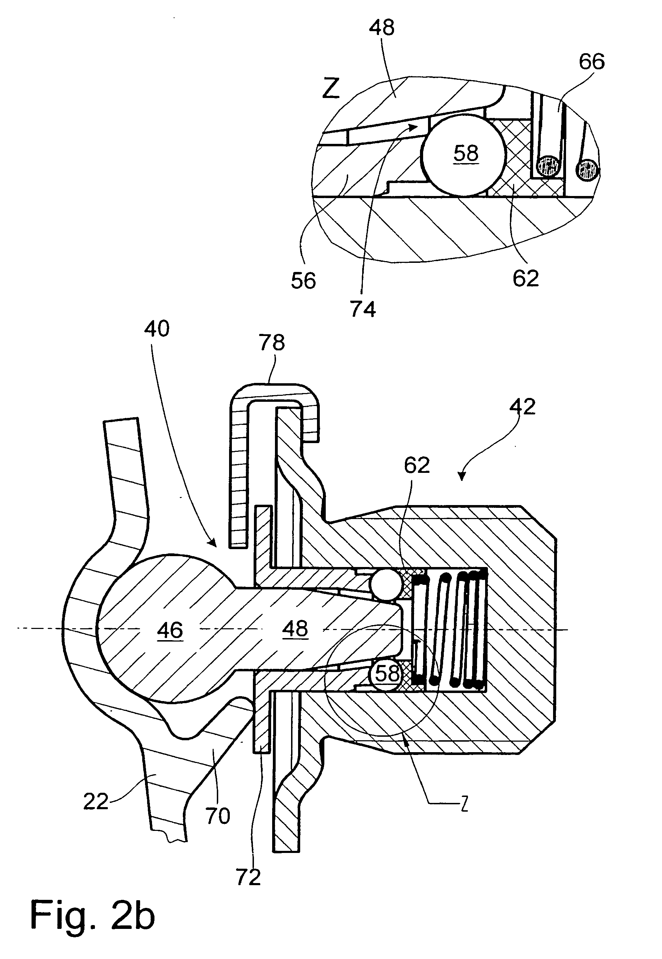

Mit zunehmenden Verschleiß erfährt der Kupplungshebel 22 im Vergleich zu dessen Verschwenk-Ausgangslage gemäß Fig. 1 eine allmähliche Verkippung, wobei der Kraftaufnahmebereich 26 und der Fortsatz 70 weiter in Richtung des Getriebegehäuses 34 verlagert werden. Sobald eine in Fig. 2b dargestellte kritische Schwenklage des Kupplungshebels 22 erreicht ist, wird der Ringkragen 72 der Verstellhülse 56 durch den Fortsatz 70 in Richtung des Getriebegehäuses 34 belastet, wodurch die Verstellhülse 56 entgegen der Wirkung der Druckfeder 66 in Richtung des Bodens 64 verschoben wird und dabei die Klemmkörper 58 ebenfalls in diese Richtung verlagert werden. Infolge der konischen bzw. keilförmigen Ausgestaltung des Zapfens 48 bildet sich zwischen diesem und den Klemmkörpern 58 ein Radialspalt 74 aus, wodurch die bisher wirkende Arretierung des Kopfelementes 40 kurzeitig aufgehoben wird, bis dieses durch die über die Gelenkpfanne 36 wirkende Kraft weiter in die Ausnehmung 52 gepresst wird und sich bei Anlage an den Klemmkörpern 58 erneut verklemmen kann. Damit ist bis zum Auftreten eines weiteren, von der Nachstelleinrichtung 38 detektierten Verschleißes eine stabile Position erreicht.

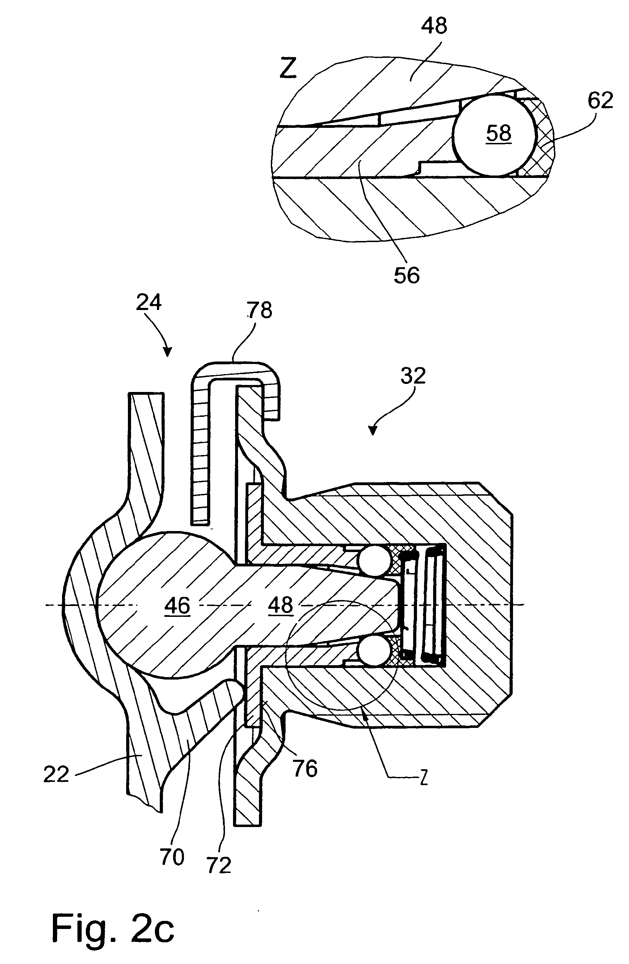

Fig. 2c zeigt schließlich die Endstellung des Kugelgelenks 24, die am verschleißbedingten Lebensdauerende der Kupplung 12 eingenommen wird. Die Verstellhülse 56 ist vollständig in die Ausnehmung 52 eingeführt und der Ringkragen 72 liegt fest an einer Stirnfläche 76 des Sockelelementes 42 an, wodurch der gesamte Verschleißausgleichsbereich des Kugelgelenks 24 aufgebraucht ist. Die ausschnittweise Vergrößerung der Fig. 2c zeigt den arretierten Zustand des Kopfelementes 40 innerhalb des Sockelelementes 42 mit zwischen diesen eingeklemmten Klemmkörpern 58.
Der Gelenkkopf 32 kann vormontiert zu dessen Montage am Getriebegehäuse 34 bereitgestellt werden, wozu dieser einen Sicherungsbügel 78 aufweist, der eine am Sockelelement 42 ausgebildete Ringscheibe 80 und den Ringkragen 72 des Kopfelementes 40 umgreift und somit die Elemente 40, 42 als Einheit zusammenhält.

## Patentansprüche

1. Ausrückeinrichtung (10) für eine Reibungskupplung (12) eines Kraftfahrzeuges, umfassend
- einen axial, entlang einer Ausrückachse (14) verschiebbaren Ausrücker (18), der zur Übertragung einer Kupplungsbetätigungskraft mit einem Ausrückorgan (20) der Kupplung (12) in Wirkverbindung steht,
- einen um eine Lagerstelle (24) schwenkbar gelagerten Kupplungshebel (22), welcher
- einen Kraftaufnahmebereich (26) zur Aufnahme der Kupplungsbetätigungskraft von einem Stellglied (28) und
- einen Kraftübertragungsbereich (30) aufweist, der sich zur Übertragung der Kupplungsbetätigungskraft mit dem Ausrücker (18) in Wirkverbindung befindet, wobei die Lagerstelle (24) ein erstes Lagerelement (32) an einer zu der Ausrückeinrichtung (10) ortsfesten Baugruppe (34) und ein zweites Lagerelement (36) am Kupplungshebel (22) aufweist, und wobei
- die Lagerstelle (24) eine automatische Nachstelleinrichtung (38) aufweist, womit diese bei einem Verschleiß der Reibungskupplung (12) selbsttätig in axialer Richtung nachgestellt wird, wobei zur Darstellung der Nachstelleinrichtung (38) das erste Lagerelement (32) ein Sockelelement (42) zur Anordnung an der ortsfesten Baugruppe (34) und ein gegenüber dem Sockelelement (42) in axialer Richtung verlagerbares Kopfelement (40) zur Anlage an dem zweiten Lagerelement (36) aufweist,
**dadurch gekennzeichnet,**
**dass** zur gegenseitigen Lagefestlegung von Sockelelement (42) und Kopfelement (40) zwischen einem konischen oder keilförmigen Abschnitt (50) am Kopfelement (40) einerseits und andererseits dem Sockelelement (42) Klemmkörper (58) eingeklemmt angeordnet sind, welche durch die Wirkung von am Kupplungshebel (22) und am ersten Lagerelement (32) ausgebildeten Sensormitteln (68) in axialer Richtung verlagerbar sind und dabei die Arretierung des Kopfelementes (40) kurzzeitig aufheben können.

2. Ausrückeinrichtung nach Anspruch 1,
**dadurch gekennzeichnet,**
**dass** sich der Abschnitt (50) in der dem Kupplungshebel (22) abgewandten Richtung verjüngt und dass die Klemmkörper (58) in dieser Richtung verlagerbar sind.

3. Ausrückeinrichtung nach Anspruch 1 oder 2,
**dadurch gekennzeichnet,**
**dass** die Klemmkörper (58) als Klemmrollen oder Klemmkugeln ausgebildet sind.

4. Ausrückeinrichtung nach einem der Ansprüche 1-3,
**dadurch gekennzeichnet,**
**dass** das Kopfelement (40) mittels einer axial verschiebbaren Verstellhülse (56) an dem Sockelelement (42) geführt ist.

5. Ausrückeinrichtung nach Anspruch 4,
**dadurch gekennzeichnet,**
**dass** der Kupplungshebel (22) bei Erreichen einer vorgegebenen Stellung eine axiale Verlagerung der Verstellhülse (56) und der Klemmkörper (58) bewirkt

6. Ausrückeinrichtung nach Anspruch 4 oder 5,
**dadurch gekennzeichnet,**
**dass** die Sensormittel (68) einen Fortsatz (70) am Kupplungshebel (22) und einen Ringkragen (72) an der Verstellhülse (56) umfassen.

7. Ausrückeinrichtung nach einem der Ansprüche 1-6,
**dadurch gekennzeichnet,**
**dass** das Kopfelement (40) in eine am Sockelelement (42) ausgebildete Ausnehmung (52) eintaucht.

8. Ausrückeinrichtung nach einem der Ansprüche 1-7,
**dadurch gekennzeichnet,**
**dass** die Klemmkörper (58) entgegen der Wirkung einer sich am Sockelelement (42) abstützenden Druckfeder (66) verlagerbar sind.

## Claims

1. Disengagement device (10) for a friction clutch (12) of a motor vehicle, comprising
- a clutch operator (18) which can be displaced axially along a disengagement axis (14) and is operatively connected to a disengagement element (20) of the clutch (12) in order to transmit a clutch actuating force,
- a clutch lever (22) which is mounted pivotably about a bearing point (24) and has
- a force absorbing region (26) for absorbing the clutch actuating force from an actuator (28) and
- a force transmission region (30) which is in an operative connection with the clutch operator (18) in order to transmit the clutch actuating force, the bearing point (24) having a first bearing element (32) on an assembly (34) which is stationary with respect to the disengagement device (10) and a second bearing element (36) on the clutch lever (22), and the bearing point (24) having an automatic adjusting device (38), by way of which
- the said bearing point (24) is adjusted automatically in the axial direction in the event of wear to the friction clutch (12), the first bearing element (32) having a pedestal element (42) for arranging on the stationary assembly (34) and a head element (40) which can be displaced in the axial direction with respect to the pedestal element (42) for contact on the second bearing element (36), in order to provide the adjusting device (38),
**characterized in that**, for the mutual positional fixing of the pedestal element (42) and the head element (40), clamping elements (58) are arranged clamped between a conical or wedge-shaped section (50) on the head element (40) on one side and the pedestal element (42) on the other side, which clamping elements (58) can be displaced in the axial direction by the action of sensor means (68) which are formed on the clutch lever (22) and on the first bearing element (32), and can in the process temporarily cancel the locking of the head element (40).

2. Disengagement device according to Claim 1, **characterized in that** the section (50) tapers in the direction which faces away from the clutch lever (22), and **in that** the clamping elements (58) can be displaced in this direction.

3. Disengagement device according to Claim 1 or 2, **characterized in that** the clamping elements (58) are configured as clamping rollers or clamping balls.

4. Disengagement device according to one of Claims 1 to 3, **characterized in that** the head element (40) is guided by means of an axially displaceable adjusting sleeve (56) on the pedestal element (42).

5. Disengagement device according to Claim 4, **characterized in that** the clutch lever (22) brings about an axial displacement of the adjusting sleeve (56) and the clamping elements (58) when a predefined position has been reached.

6. Disengagement device according to Claim 4 or 5, **characterized in that** the sensor means (68) comprise a projection (70) on the clutch lever (22) and an annular collar (72) on the adjusting sleeve (56).

7. Disengagement device according to one of Claims 1 to 6, **characterized in that** the head element (40) dips into a recess (52) which is formed on the pedestal element (42).

8. Disengagement device according to one of Claims 1 to 7, **characterized in that** the clamping elements (58) can be displaced counter to the action of a compression spring (66) which is supported on the pedestal element (42).

## Revendications

1. Dispositif de débrayage (10) pour un embrayage à friction (12) d'un véhicule automobile, comprenant :
- un dispositif débrayeur (18) déplaçable axialement le long d'un axe de débrayage (14), qui est en liaison opérationnelle avec un organe de débrayage (20) de l'embrayage (12) afin de transmettre une force d'actionnement d'embrayage,
- un levier d'embrayage (22) positionné de manière pivotante autour d'un point d'appui (24), lequel présente
- une zone d'absorption de force (26) afin d'absorber la force d'actionnement d'embrayage d'un organe d'actionnement (28) et
- une zone de transmission de force (30), qui se trouve en liaison opérationnelle avec le dispositif débrayeur (18) afin de transmettre la force d'actionnement d'embrayage, le point d'appui (24) présentant un premier élément d'appui (32) sur un groupe (34) fixe par rapport au dispositif débrayeur (10) et un deuxième élément d'appui (36) sur le levier d'embrayage (22), et
- le point d'appui (24) présentant un dispositif d'ajustement automatique (38), avec lequel celui-ci est ajusté automatiquement dans la direction axiale en cas d'usure de l'embrayage à friction (12), le premier élément d'appui (32) présentant un élément de socle (42) pour la disposition sur le groupe fixe (34) et un élément de tête (40) déplaçable dans la direction axiale par rapport à l'élément de socle (42) pour venir en appui sur le deuxième élément d'appui (36), afin de représenter le dispositif d'ajustement (38),
**caractérisé en ce que**
en vue du positionnement réciproque de l'élément de socle (42) et de l'élément de tête (40) entre une section (50) conique ou cunéiforme sur l'élément de tête (40) d'une part et d'autre part l'élément de socle (42), des corps de serrage (58) sont disposés en étant serrés, lesquels sont déplaçables dans la direction axiale par l'action des moyens de capteur (68) réalisés sur le levier d'embrayage (22) et sur le premier élément d'appui (32) et peuvent ainsi annuler en peu de temps le blocage de l'élément de tête (40).

2. Dispositif de débrayage selon la revendication 1,
**caractérisé en ce que**
la section (50) s'amincit dans la direction qui se détourne du levier d'embrayage (22) et **en ce que** les corps de serrage (58) sont déplaçables dans cette direction.

3. Dispositif de débrayage selon la revendication 1 ou 2,
**caractérisé en ce que**
les corps de serrage (58) sont réalisés comme des rouleaux de serrage ou des billes de serrage.

4. Dispositif de débrayage selon l'une quelconque des revendications 1 à 3,
**caractérisé en ce que**
l'élément de tête (40) est guidé au moyen d'un manchon de réglage (56) déplaçable axialement sur l'élément de socle (42).

5. Dispositif de débrayage selon la revendication 4,
**caractérisé en ce que**
le levier d'embrayage (22) provoque lorsqu'il atteint une position prescrite un déplacement axial du manchon de réglage (56) et des corps de serrage (58).

6. Dispositif de débrayage selon la revendication 4 ou 5,
**caractérisé en ce que**
les moyens de capteur (68) comprennent un prolongement (70) sur le levier d'embrayage (22) et une collerette annulaire (72) sur le manchon de réglage (56).

7. Dispositif de débrayage selon l'une quelconque des revendications 1 à 6,
**caractérisé en ce que**
l'élément de tête (40) plonge dans un évidement (52) réalisé sur l'élément de socle (42).

8. Dispositif de débrayage selon l'une quelconque des revendications 1 à 7,
**caractérisé en ce que**
les corps de serrage (58) sont déplaçables dans le sens contraire de l'action d'un ressort de pression (66) s'appuyant sur l'élément de socle (42).
